# EUROPÄISCHE PATENTSCHRIFT

(11) **EP 1 853 982 B1**
(45) Veröffentlichungstag und Bekanntmachung des Hinweises auf die Patenterteilung: **20.08.2008**
(21) Anmeldenummer: 06724892.2
(22) Anmeldetag: 27.02.2006
(51) Int. Cl.: G05B 19/418, G06F 17/00

(54) **VERFAHREN ZUM ELEKTRONISCHEN BETREIBEN EINER WERKZEUGMASCHINE**
METHOD FOR ELECTRONICALLY OPERATING A MACHINE TOOL
PROCEDE PERMETTANT LE FONCTIONNEMENT ELECTRONIQUE D'UNE MACHINE-OUTIL

(30) Priorität: 28.02.2005 DE 102005009089; 28.02.2005 DE 102005009091; 28.02.2005 DE 102005009090; 22.03.2005 DE 102005013290
(43) Veröffentlichungstag der Anmeldung: 14.11.2007
(73) Patentinhaber: SIEMENS AKTIENGESELLSCHAFT, 80333 München (DE)
(72) Erfinder: MAIER, Volker, 40489 Düsseldorf (DE)
(86) Internationale Anmeldenummer: PCT/EP2006/060290
(87) Internationale Veröffentlichungsnummer: WO 2006/089963

(56) Entgegenhaltungen:
- DE-A1- 10 152 765
- DE-U1- 8 817 018
- US-A1- 2003 014 387
- US-A1- 2004 158 474

## Beschreibung

Die vorliegende Erfindung betrifft ein Verfahren zum elektronischen Betreiben, d.h. zum elektronischen Steuern, zweier Werkzeugmaschine über eine räumliche Distanz, d.h. auch zentral von einer Serverplattform zu einer an einer Produktionsstätte aufgestellten Werkzeugmaschine.

Bei Fertigungsprozessen ist zur Erzielung einer optimalen Produktqualität die kontinuierliche Überwachung, Verbesserung und Anpassung des Prozesses wichtig. Auch wenn heutzutage Werkzeugmaschinen elektronisch gesteuert sind, werden die dort auflaufenden-Prozessdaten bisher nur kurzzeitig zwischengespeichert, soweit es eine begrenzte Speicherkapazität und Rechenleistung von Speichern und Maschinensteuerung ermöglicht, und für Kurzzeitanalysen vor Ort durch Fachpersonal des Betreibers zur Optimierung des Prozesses genutzt. Im Stand der Technik erfolgt keine kontinuierliche Prozessoptimierung und Anpassung der Prozessparameter, vor allem auch nicht bei komplexen Fertigungsprozessen.

Es können heute bereits solche komplizierten Prozesse in Algorithmen modelliert werden, hierfür muss jedoch eine beträchtliche Rechenkapazität zur Verfügung gestellt sein.

Aus der DE 101 52 765 A1 ist es bekannt, Expertenwissen von Maschinenherstellern via Internet an eine Maschine zu bringen. Maschinenseitig ist ein Arbeitsrechner vorgesehen. Über eine Datenkommunikationsverbindung ist dieser mit einem Hauptrechner verbunden, der zur Erzeugung und Bereitstellung von maschineribezogenen Daten und Diensten vorgesehen ist. Mithilfe des Arbeitsrechners sind in Echtzeit Maschinenzustandsdaten erfassbar, an den Hauptrechner übertragbar, der in Abhängigkeit von solchen Maschinenzustandsdaten Daten und Dienste erzeugt, die wiederum an den Arbeitsrechner gesandt werden.

Aus der US2003/0014387 A1 ist ein System aus einem Host und mehreren Clients bekannt, wobei die Clients CNC-Maschinentools sein können. Von den Clientsystemen werden Echtzeitdaten aufgenommen, und zwar mit Hilfe von Software welche über ein Netzwerk von dem Host zu den Clients heruntergeladen wurde. Die erfassten Daten werden über das Netzwerk dem Host zugeführt, welcher daraus Dateien erzeugt, die dort auch verwaltet werden.

Das deutsche Gebrauchsmuster DE 881,70 18 U1 offenbart eine Werkzeugmaschine zur komplexen Bearbeitung) welche einen ersten und zweiten Spindelstock mit jeweils antreibbaren Werkstücksspindeln umfasst, die einander gegenüberliegend angeordnet sind. Mit Hilfe von Software erfolgt eine Ansteuerung der beiden Spindeln so, dass diese bestimmte Winkelzustellpositionen zueinander einnehmen.

Es ist Aufgabe der vorliegenden Erfindung, ein Verfahren der oben genannten Art bereitzustellen, mit dem eine kontinuierliche Überwachung und Verbesserung des gesamten Prozesses unter Einbeziehung zumindest zweier Werkzeugmaschinen möglich ist.

Die Erfindung stellt hierfür ein Verfahren nach Patentanspruch 1 zur Verfügung.

Demgemäß steht eine eine elektronische Maschinensteuerung aufweisende Werkzeugmaschine an einer Produktionsstelle in Datenverbindung mit einer von der Produktionsstelle unabhängigen Serverplattform. Auf der Serverplattform steht zumindest ein Softwaremodellalgorithmus zum Simulieren des Maschinenverhaltens beim Betrieb zur Verfügung. Prozessdaten werden ständig oder wiederholt, z.B. gepulst, von der Maschine über die Datenverbindung an die Serverplattform übermittelt, und diese Prozessdaten werden vom Simulationsalgorithmus be- bzw. verarbeitet. In dem Rahmen des Algorithmus werden Soll-Prozessdaten für einen späteren Zeitpunkt ermittelt. Mit anderen Worten wird ermittelt, wie die Prozessdaten ausgehend von einem bestimmten Zeitpunkt bei normallaufendem Prozess zu einem späteren Zeitpunkt aussehen. Die Soll-Prozessdaten werden nachfolgend mit Ist-Prozessdaten für den späteren Zeitpunkt verglichen, und es erfolgt eine Korrektur in der Maschinensteuerung, indem der Algorithmus geänderte Werte für zumindest einen Teil der Prozessdaten (also z.B. nur einen Teil der Parameter) erzeugt, und diese geänderten Prozessdaten über die Datenverbindung an die Maschinensteuerung gesandt werden. Die Maschinensteuerung setzt dann die geänderten Prozessdaten zur Steuerung der Maschine ein. Zudem erfasst der Softwaremodellalgorithmus modellhaft das Zusammenwirken der beiden Werkzeugmaschinen und erzeugt auf Grund von Ist-Prozessdaten der einen Werkzeugmaschine Soll-Prozessdaten für die andere Werkzeugmaschine.

Die Erfindung verwendet eine gesonderte Serverplattform, auf der die hochkomplizierten Algorithmen laufen können, wobei die teure und aufwändige Serverplattform eine zentrale Serverplattform ist, die für eine Vielzahl von Produktionsstätten und Werkzeugmaschinen zur Verfügung stehen kann, so dass nicht zu jeder Werkzeugmaschine zugehörig eine solche Serverplattform gekauft werden muss, was den Rahmen üblicher Investitionen sprengen würde. Die Erfindung vermeidet somit, dass die Prozessdaten von einzelnen Maschinen nur auf Kleinrechnern gespeichert wurden und ermöglicht eine umfangreiche Sammlung von Prozessdaten, beispielsweise auch zur Optimierung der Softwarealgorithmen. Von der ökonomischen Seite her kann eine Rechnungsstellung an den Besitzer der Werkzeugmaschinen bzw. an die einzelnen Produktionsstellen erfolgen, dass die Rechendauer des zugehörigen Softwaremodellalgorithmus ermittelt wird bzw. ermittelt wird, wie viel Arbeitsspeicher für wie viel Zeit auf der Serverplattform in Anspruch genommen wurde. Im Rahmen der Erfindung wird der gesamte Produktionsprozess modellhaft dargestellt, insbesondere das Zusammenwirken von zwei Werkzeugmaschinen. Der Softwarealgorithmus beeinflusst das Zusammenwirken der beiden Maschinen so, dass er auf Grund von Ist-Prozessdaten von der einen Werkzeugmaschine Soll-Prozessdaten für die andere Werkzeugmaschine erzeugt.

Gemäß einer bevorzugten Ausführungsform wurden die Softwaremodellalgorithmen zuvor über dieselbe Datenverbindung, beispielsweise das Internet, von dem Hersteller der Maschine und/oder einem Softwaredienstleister auf die Serverplattform geladen. Zum Transport der Prozessdaten und der Softwaremodellalgorithmen kann die Datenverbindung mit Zugriffssperren versehen sein oder codiert erfolgen.

Es kann eine Vielzahl von Softwaremodellalgorithmen zur Verfügung stehen, aus denen dann seitens der Produktionsstätte über die Datenverbindung eine Auswahl erfolgt, so dass produktionsseitig festgelegt wird; wie die Werkzeugmaschine modellhaft dargestellt wird. Sämtliche Prozessdaten können insbesondere gespeichert werden, um den Softwaremodellalgorithmus dauerhaft zu optimieren, auch in Bezug nicht nur auf Werkzeugmaschinentypen, sondern auch auf individuelle Ausführungsformen von Werkzeugmaschinen.

Eine typische Werkzeugmaschine ist eine Bohrmaschine, bei der als Prozessdaten das Spindeldrehmoment oder der Spindelstrom erfasst werden.

Nicht gemeint sind mit Prozessdaten langfristige Betriebsdaten, wie etwa die Luftfeuchtigkeit und die Temperatur in der Fabrikhalle. Hierfür müssten gesonderte Verfahren zur Verfügung gestellt werden.

Prozessdaten sind also Maschinenbetriebsdaten, die die Maschine beim laufenden Betrieb insbesondere kurzfristig veränderlich zeigt.

Eine bevorzugte Ausführungsform der Erfindung wird nun unter Bezug auf die Zeichnung beschrieben, in der:

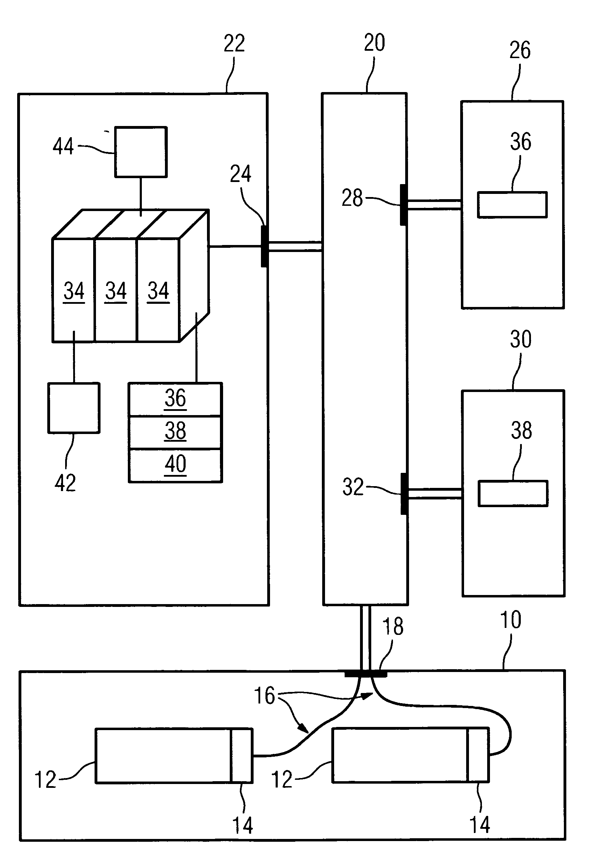

- FIG 1: den schematischen Aufbau eines Systems zum elektronischen Betreiben einer Werkzeugmaschine von der Ferne her darstellt.

Die FIG 1 zeigt schematisch eine Produktionsstätte 10, an der ein Fabrikprozess abläuft mit einer Vielzahl von Werkzeugmaschinen 12, die elektronische Steuerungen 14 aufweisen. Die elektronischen Steuerungen 14 sind über Datenleitungen 16 und eine Schnittstelle 18 an das Internet 20 angeschlossen. Ferner ist an das Internet 20 ein zentraler Server 22 über eine Schnittstelle 24 angeschlossen. Auch an das Internet angeschlossen ist ein Hersteller 26 über eine Schnittstelle 28 sowie ein Softwaredienstleister 30 über eine Schnittstelle 32.

In der zentralen Serverplattform 22 befindet sich nun eine Vielzahl von Computereinheiten 34, welche zusammen einen Server bilden. In den Computereinheiten 34 befindet sich ein Speicher zum Speichern von Softwaremodellalgorithmen 36, 38 und 40. Die Softwaremodellalgorithmen 36 und 38 dienen hier zur modellhaften Darstellung der Werkzeugmaschinen 12, der Softwaremodellalgorithmus 40 dient zum Steuern einer hier nicht gezeigten Werkzeugmaschine, welche an einer anderen Produktionsstätte aufgestellt sein könnte. Die Softwaremodellalgorithmen können wie der Softwaremodellalgorithmus 36 von dem Hersteller der Werkzeugmaschinen 12 stammen und von diesem über das Internet heruntergeladen worden sein, sie können aber auch von einem Softwaredienstleister eigens erstellt sein, wie der Softwarealgorithmus 38, und ebenfalls über das Internet auf die Serverplattform 22 heruntergeladen worden sein. Es stehen also verschiedene Softwarealgorithmen, welche verschiedene Softwaremodelle des Produktionsprozesses an der Produktionsstätte 10 im Computerprogramm darstellen, zur Verfügung. Anhand der Maschinensteuerung 14 erfolgt eine Auswahl eines der Softwarealgorithmen 36 und 38 für die zugehörige Maschine 12. Während des Betriebs der Maschine wie beispielsweise eines Bohrers stehen in der Maschinensteuerung mehrere Prozessdaten wie etwa das Spindeldrehmoment oder der Spindelstrom zur Verfügung. Diese Prozessdaten werden möglichst vollständig und möglichst zeitnah, d.h. simultan, über das Internet 20 an die Serverplattform 22 geleitet. Dort laufen die Softwaremodellalgorithmen ab, wobei als Startdaten beispielsweise tabellierte Startdaten zur Verfügung stehen oder zuvor übermittelte Daten verwendet werden. Die Softwaremodellalgorithmen können so gestaltet sein, dass sie mitten im laufenden Prozess beginnen. Die Softwaremodellalgorithmen sagen nun vorher, wie sich die Startdaten und gegenwärtig erfasste Ist-Daten in Zukunft entwickeln sollen, d.h. die Softwaremodellalgorithmen generieren Soll-Prozessdaten für spätere Zeitpunkte. Zu diesen späteren Zeitpunkten werden dann die tatsächlichen Ist-Prozessdaten erfasst und mit den Soll-Prozessdaten verglichen. Sollten diese nicht miteinander übereinstimmen (innerhalb bestimmter, von dem Softwaremodellalgorithmus vorgegebener Schranken) generiert der Softwaremodellalgorithmus geänderte Werte für zumindest einen Teil der Prozessdaten und übermittelt diese über das Internet 20 an die Steuerung 40 der Werkzeugmaschinen 12. Hier kommt es zum Eingriff in die Betriebsabläufe der Werkzeugmaschinen: Die Werkzeugmaschine 12 wird nicht mehr nur an der Produktionsstätte 10 durch die Steuerung 14 alleine gesteuert auf Grund von Daten oder Datentabellen, welche dort zur Verfügung stehen, sondern es werden von der Serverplattform 22 erzeugte geänderte Prozessdaten verarbeitet. Beispielsweise kann die Serverplattform auf Grund einer Bohrtiefe eines von einer Bohrmaschine 12 zu bohrenden Lochs feststellen, dass das Spindeldrehmoment der Bohrmaschine erhöht oder erniedrigt werden muss und gibt entsprechende Daten an die Maschinensteuerung 14 aus.

Wie bereits erwähnt stehen für eine einzige Werkzeugmaschine 12 zwei verschiedene Modellalgorithmen 36 und 38 zur Verfügung. Diese Algorithmen können weiter optimiert werden, indem die Prozessdaten in einem Speicher 42 gespeichert werden, wobei dort insbesondere die von der Softwareplattform 22 generierten veränderten Prozessdaten mitgespeichert werden. Auf Grund des Ansammelns von Daten in dem Speicher 42 wird es möglich, die Softwaremodellalgorithmen zu optimieren, d.h. die Modelle an die realen Werkzeugmaschinen 12 anzupassen oder auch eine Anpassung an individuelle Maschinen vorzunehmen.

Im Produktionsprozess wirken mehrere Maschinen oft hintereinander zusammen, z.B. wird beim Bohren eines Bohrlochs, wie von einer zweiten Maschine nachgebohrt. Die Serverplattform 22 dient auch zur Überwachung und Steuerung des Gesamtprozesses, d.h. dass sie Ist-Prozessdaten von der einen Werkzeugmaschine erhält und verarbeitet, um neue Parameter, neue Prozessdaten für die zweite Werkzeugmaschine zur Verfügung zu stellen.

Mit der Erfindung ist es möglich, durch zentral zur Verfügung stehende leistungsfähige Computereinheiten 34 hochkomplexe Algorithmen 36 und 38 ablaufen zu lassen, welche die Maschinensteuerung 14 überfordern würden. Der gesamte Aufwand mit dem Rechner 34 wäre auch für die Produktionsstätte 10 zu hoch. Die Erfindung verknüpft daher einen geschickten Datenaustausch mit der geschickten Nutzung von Ressourcen. Die einzelnen Rechenzeiten für einzelne Produktionsstätten 10 oder einzelne Werkzeugmaschinen 12 können in einem Speicher 44 tabellarisch zur Rechnungsstellung erfasst werden. Dadurch muss die Serverplattform nicht zum selben Besitzer gehören wie die Produktionsstätte. Organisationstheoretisch gesehen handelt es sich dann um ein Outsourcing der Automatisierungsüberwachung an der Produktionsstätte von Seiten des Betreibers der Produktionsstätte 10.

## Patentansprüche

1. Verfahren zum elektronischen Betreiben zweier Werkzeugmaschinen, wobei:
- eine eine elektronische Maschinensteuerung (14) aufweisende Werkzeugmaschine (12) an einer Produktionsstätte aufgestellt ist, und
- in Datenverbindung (20) mit einer von der Produktionsstätte (10) unabhängigen Serverplattform (22) steht,
- auf der Serverplattform (22) zumindest ein Softwaremodellalgorithmus (36, 38) zum Simulieren des Maschinenverhaltens beim Betrieb zur Verfügung-steht,
- Prozessdaten ständig oder wiederholt von der Maschinensteuerung (14) über die Datenverbindung (20) an die Serverplattform (22) übermittelt werden,
- die Prozessdaten vom Softwaremodellalgorithmus (36, 38) bearbeitet werden und von diesem Soll-Prozessdaten für einen späteren Zeitpunkt ermittelt werden,
- die Soll-Prozessdaten mit zu dem späteren Zeitpunkt übermittelten Ist-Prozessdaten verglichen werden,
- der Algorithmus geänderte Werte für zumindest einen Teil der Prozessdaten erzeugt,
- diese geänderten Prozessdaten über die Datenverbindung (20) an die Maschinensteuerung (14) gesandt werden, und
- die Maschinensteuerung die geänderten Prozessdaten zur Steuerung der Maschine (12) an der Produktionsstätte (10) einsetzt, wobei der Softwaremodellalgorithmus (36, 38) das Zusammenwirken der beiden Werkzeugmaschinen modellhaft erfasst und auf Grund von Ist-Prozessdaten der einen Werkzeugmaschine Soll-Prozessdaten für die andere Werkzeugmaschine erzeugt.

2. Verfahren nach Anspruch 1, **dadurch gekennzeichnet, dass** ein Softwaremodellalgorithmus (36, 38) zuvor über dieselbe Datenverbindung (20) von dem Hersteller der Maschine (26) und/oder einen Softwaredienstleister (30) auf die Softwareplattform geladen wird.

3. Verfahren nach Anspruch 1 oder 2, **dadurch gekennzeichnet, dass** die Datenverbindung über Internet, insbesondere mit Zugriffssperren oder codiert, erfolgt.

4. Verfahren nach einem der vorhergehenden Ansprüche, **dadurch gekennzeichnet, dass** eine Vielzahl von Softwaremodellalgorithmen (36, 38) zur Verfügung steht, aus der eine Auswahl in der Produktionsstätte (10) über die Datenverbindung (20) erfolgt.

5. Verfahren nach einem der vorhergehenden Ansprüche, **dadurch gekennzeichnet, dass** die Prozessdaten ein Spindeldrehmoment oder einen Spindelstrom für eine Bohrmaschine (12) umfassen.

6. Verfahren nach einem der vorhergehenden Ansprüche, **dadurch gekennzeichnet, dass** Prozessdaten, insbesondere sämtliche Prozessdaten, gespeichert werden (42), um einen Softwaremodellalgorithmus (36, 38) zu optimieren.

7. Verfahren nach einem der vorhergehenden Ansprüche, **dadurch gekennzeichnet, dass** die Rechendauer des Softwaremodellalgorithmus für verschiedene Werkzeugmaschinen tabellarisch (44) ermittelt wird.

## Claims

1. Method for electronically operating two machine tools, wherein:
- a machine tool (12) comprising an electronic machine control (14) is set up at a production site, and
- is in data connection (20) with a server platform (22) which is independent of the production site (10),
- at least one software model algorithm (36, 38) is available on the server platform (22) for simulating the machine behaviour during operation,
- process data is transmitted constantly or repeatedly from the machine control (14) via the data connection (20) to the server platform (22),
- the process data is edited by the software model algorithm (36, 38) and set process data for a later point in time is determined by said software model algorithm,
- the set process data is compared with actual process data transmitted at the later point in time,
- the algorithm generates changed values for at least some of the process data,
- this changed process data is sent via the data connection (20) to the machine control (14), and
- the machine control uses the changed process data for controlling the machine (12) at the production site (10), whereby the software model algorithm (36, 38) records the interaction of the two machine tools in model form and on the basis of actual process data from the one machine tool generates set process data for the other machine tool.

2. Method according to claim 1, **characterised in that** a software model algorithm (36, 38) is loaded onto the software platform in advance via the same data connection (20) by the manufacturer of the machine (26) and /or a software service provider (30).

3. Method according to claim 1 or claim 2, **characterised in that** the data connection is effected over internet, in particular with access restrictions or in a coded manner.

4. Method according to any one of the preceding claims, **characterized in that** a plurality of software model algorithms (36, 38) are available, from which a selection is effected in the production site (10) via the data connection (20).

5. Method according to any one of the preceding claims, **characterised in that** the process data comprises a spindle torque or a spindle current for a boring machine (12).

6. Method according to any one of the preceding claims, **characterised in that** process data, in particular all the process data, is stored (42) in order to optimize a software model algorithm (36, 38).

7. Method according to any one of the preceding claims, **characterized in that** the computing time of the software model algorithm is determined in tabular form (44) for various machine tools.

## Revendications

1. Procédé pour faire fonctionner électroniquement deux machines-outils dans lequel :
- une machine-outil (12) ayant une commande (14) électronique de machine est installée en un emplacement de production ; et
- est en liaison (20) de données avec une plateforme (22) de serveur indépendante de l'emplacement (10) de production ;
- sur la plateforme (22) de serveur est disponible au moins un algorithme (36, 38) de modèle de logiciel pour simuler le comportement de la machine lors du fonctionnement ;
- des données de procédé sont transmises en permanence ou de façon répétée par la commande (14) de machine à la plateforme (22) de serveur en passant par la liaison (20) de données ;
- les données de procédé sont traitées par l'algorithme (36, 38) de modèle de logiciel et il est déterminé à partir de celui-ci des données de procédé de consigne pour un instant ultérieur ;
- les données de procédé de consigne sont comparées aux données de procédé réelles transmises à l'instant ultérieur ;
- l'algorithme produit des valeurs modifiées pour au moins une partie des données de procédé ;
- ces données de procédé modifiées sont envoyées par la liaison (20) de données à la commande (14) de machine ; et
- la commande de machine utilise les données de procédé modifiées pour commander la machine (12) à l'emplacement (10 ) de production, l'algorithme (36, 38) de modèle de logiciel détectant en forme de modèle la coopération des deux machines-outils et produisant sur la base de données de procédé réelles de l'une des machines-outils des données de procédé de consigne pour l'autre machine-outil.

2. Procédé suivant la revendication 1, **caractérisé en ce qu'**un algorithme (36, 38) de modèle de logiciel est chargé d'abord en passant par la même liaison (20) de données du fabricant de la machine (26) et/ou d'un prestataire (30) de service de logiciel à la plateforme de logiciel.

3. Procédé suivant la revendication 1 ou 2, **caractérisé en ce que** la liaison de données s'effectue par Internet, notamment avec des barrières à l'accès ou d'une façon codée.

4. Procédé suivant l'une des revendications précédentes, **caractérisé en ce qu'**une pluralité d'algorithmes ( 36, 38) de modèle de logiciel est mise à disposition, pluralité à partir de laquelle une sélection des emplacements ( 10) de production s'effectue par la liaison (20) de données.

5. Procédé suivant l'une des revendications précédentes, **caractérisé en ce que** les données de procédé comprennent un couple de rotation de broche ou un courant de broche d'une machine (12) d'alésage.

6. Procédé suivant l'une des revendications précédentes, **caractérisé en ce que** des données de procédé, notamment des données de procédé d'ensemble, sont mémorisées ( 42) pour optimiser un algorithme (36, 38) de modèle de logiciel.

7. Procédé suivant l'une des revendications précédentes, **caractérisé en ce que** la durée de calcul de l'algorithme du modèle de logiciel est déterminée sous forme de table (44) pour diverses machines-outils.
